(19) **Europäisches Patentamt**

**European Patent Office**

**Office européen des brevets**

(11) **EP 0 998 122 A2**

(12) **EUROPEAN PATENT APPLICATION**

(43) Date of publication:
**03.05.2000 Bulletin 2000/18**

(51) Int Cl.$^7$: **H04N 1/393**

(21) Application number: **99308489.6**

(22) Date of filing: **27.10.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **28.10.1998 US 181346**
**16.06.1999 US 334097**

(71) Applicant: **Hewlett-Packard Company**
**Palo Alto, California 94304 (US)**

(72) Inventors:
• **Elad, Michael**
**Haifa 34603 (IL)**
• **Altunbasak, Yucel**
**Atlanta, GA 30341 (US)**
• **Shaked, Doron**
**Haifa 34361 (IL)**
• **Patti, Andrew J.**
**Sunnyvale, CA 94087 (US)**
• **Hel-Or, Yacov**
**Zichron, Yakov (IL)**
• **Taubman, David**
**Pymble, NSW 2073 (AU)**

(74) Representative: **Jehan, Robert et al**
**Williams, Powell & Associates,**
**4 St Paul's Churchyard**
**London EC4M 8AY (GB)**

(54) **Apparatus and method of increasing scanner resolution**

(57) Hardware resolution of a scanner (10) is increased without improving the quality of the scanner's sensor array (34) or imaging optics (32). Multiple representations of an image are generated by a scanner (10). The scanner (10) is configured to intentionally induce a motion error between the representations. A higher resolution image is estimated from the multiple, lower resolution representations by using a super resolution algorithm such as Image Demosaicing and Enhancement ("IDE"), a Projections onto Convex Sets ("POCS"), Maximum Likelihood ("ML"), or Maximum A-posteriori Probability ("MAP") based algorithm.

**FIGURE 2a**

**Description**

The invention relates to an imaging system for, for example, optical scanners and for enhancing scanner resolution.

Scanners are typically advertised as having two resolutions: a hardware or true resolution and an enhanced or interpolated resolution. The true resolution provides a measure of the imaging ability of the scanner. A typical resolution for a low-end scanner might be 300 dots per inch ("dpi").

The true resolution of a scanner is dependent, in part, upon quality of the scanner's sensor array and imaging optics. Ideally, the sensor array and optics would image a point source as a point of light. In reality, however, the image is smeared. Factors contributing to the smearing of the image include the geometry of the sensor's receptive field, optical defocus and chromatic aberration effects in which different wavelengths of light from the single point source do not coincide on the sensor array's surface. Scanners including higher quality sensor arrays and imaging optics will cause less smearing than scanners including lower quality sensor arrays and imaging optics.

The enhanced or interpolated resolution, in contrast, is more a function of software. Software-based techniques such as bilinear interpolation and pixel replication are typically used for interpolating the resolution. For example, a hardware resolution of 300 dpi might be enhanced to a resolution of 4800 dpi. Enhancing or interpolating the hardware resolution allows the size of the scanned image to be enlarged.

However, interpolating the resolution does not increase the real detail that is collected by the scanner. That is, interpolating does not provide real information about the image. An exemplary bilinear interpolation algorithm might involve interpolating a pixel by finding four neighboring pixels, multiplying color intensities of the four neighboring pixels by weighting coefficients, and adding the results to obtain the color intensity value of the interpolated pixel. Thus, resolution enhancement is merely estimated from the information provided by the scanner; it does not increase the amount of real information obtained by the scanner.

The true resolution of the scanner may be increased by increasing the number of detector elements in the sensor array, or by using higher quality imaging optics. For instance, the density of detector elements could be increased from 300 dpi to 600 dpi, or aspherical imaging lenses could be used instead of spherical imaging lenses.

However, increasing the number of detector elements and improving the quality of the imaging optics will substantially increase the cost of manufacturing the scanner. The market for scanners is fiercely competitive. Increasing hardware resolution by increasing the density of detector elements and/or improving the quality of the optics is something that manufacturers of low-end scanners cannot afford.

There is a need to increase the hardware resolution of a scanner without substantially increasing the cost of the scanner.

According to an aspect of the present invention there is provided an imaging system as specified in claim 1.

According to another aspect of the present invention there is provided a method of scanning an image, the method comprising the steps of:

performing a plurality of scans of the image to produce a corresponding plurality of first representations of the image; motion errors having been intentionally induced between the plurality of first representations; and
using an estimation algorithm to generate a second representation of the image from the plurality of first representations of the image, the second representation having a higher resolution than the plurality of first representations.

The preferred embodiment offers an approach for increasing the true (hardware) resolution without substantially increasing the scanner cost. In this embodiment, a plurality of lower resolution scans of an image are made to produce a corresponding plurality of first representations of the image. Motion errors are intentionally induced between the plurality of first representations. A higher resolution image may then be generated from the lower resolution images by using a super resolution algorithm. Although computed from scanned data through software, the higher resolution image corresponds to an increase of the true (hardware) resolution, equivalent to a hardware change.

An embodiment of the present invention is described below, by way of example only, with reference to the accompanying drawings, in which:

Figure 1 is an illustration of an imaging model of a scanner;
Figures 2a and 2b are flowcharts of a method of using a Maximum Likelihood based estimation algorithm to generate a high resolution image from a plurality of lower resolution images, with Figure 2a illustrating a pre-processing stage and Figure 2b illustrating an iterative stage;
Figure 3a is a flowchart of a method of using a Projections onto Convex Sets based estimation algorithm to generate a high resolution image from a plurality of lower resolution images;
Figure 3b is an illustration of a residual error computation error during use of the Projections onto Convex Sets based estimation algorithm;

Figure 3c is an illustration of a back projection of residual error during use of the Projections onto Convex Sets based estimation algorithm;

Figures 4 and 5 illustrate a method of using an IDE algorithm to generate a high resolution representation from two lower resolution representations;

Figure 6 is an illustration of an embodiment of scanner;

Figure 7 is an illustration of a sensor array of the scanner; and

Figure 8 is an illustration of light rays passing through a deflection plate of the scanner.

As shown in the drawings for purposes of illustration, there is shown an embodiment of optical scanner. True (hardware) resolution of the scanner is improved without increasing the number of sensors in the sensor array or without increasing the quality of the imaging optics. Instead, the true resolution is improved by performing multiple scans of an image and using a super resolution algorithm such as an Image Demosaicing and Enhancement ("IDE") algorithm, a Projections onto Convex Sets ("POCS") based algorithm or a Maximum Likelihood ("ML") based algorithm or a Maximum A-posteriori Probability ("MAP") based algorithm to generate a higher resolution image from the multiple scans. In this manner, the invention offers a low cost approach for increasing true resolution of a scanner without changing hardware.

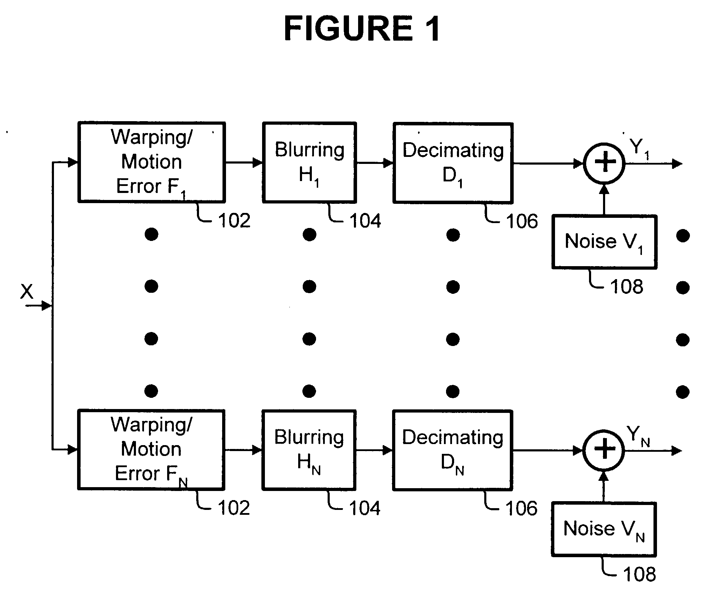

Referring to Figure 1, the general principle behind generating a high-resolution image from multiple low-resolution images will now be described. A scanner performs a scan of a continuous-domain two-dimensional image X. In each scan, a motion error or warping is intentionally induced (modeled by a first block 102). Blurring (modeled by a second block 104) of the continuous image X also occurs due to optical lens blurring, sensor integration area blurring, etc. The continuous-domain image X is sampled to produce a low-resolution digital image $Y_k$, where k is a scan index (modeled by a third block 106). Some resolution in the image will be lost during sampling or decimation. White noise is also added to the sampled image (modeled by a fourth block 108). The white noise is assumed to be Gaussian random vectors having a zero mean. Thus, each low resolution image $Y_k$ may be represented as follows:

$$Y_k = D_k \, H_k \, F_k \, X + V_k$$

where $D_K$ represents the decimation operation, $H_k$ represents the blurring, $F_k$ represents the motion error or warping, and $V_k$ represents the white noise. Notice that in the above formulation, a two-dimensional signal has been replaced by one-dimensional vectors by column stacking. In this way, linear operators on images are represented by matrices.

Multiple scans of the continuous domain image X are performed to produce multiple representations. For each scan, a motion error or warping is intentionally induced relative to the other scans. Consequently, the first pixel in a first representation $Y_1$ corresponds to a different part of the image X than a first pixel in an $n^{th}$ representation $Y_n$. Resulting are different scans of the same sampled, blurred continuous domain image X. Therefore, each scan yields different information about the continuous domain image X.

By measuring the blurring of the scanner (which can be determined by measuring its Point Spread Function) and estimating the amount of intentionally induced motion error, an inverse operation can be performed on the images set. However, solving for the high resolution image X can be extremely difficult. The difficulty increases as the number of pixels in the high resolution image X is increased.

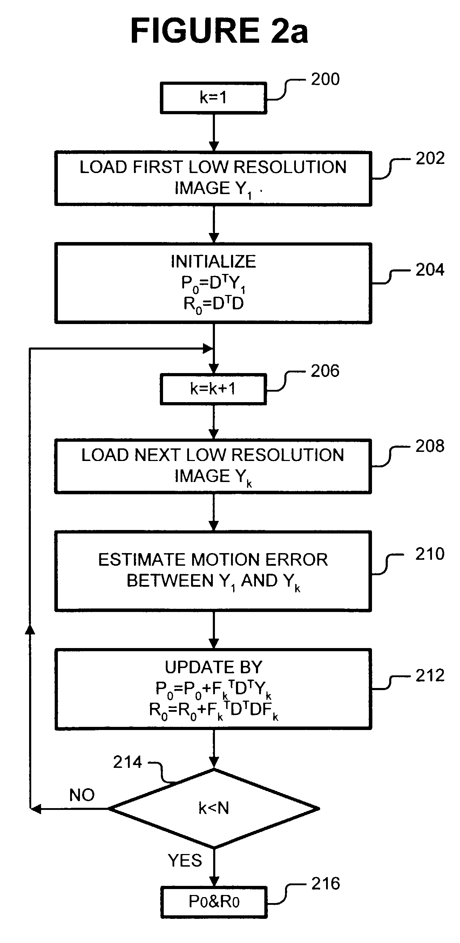

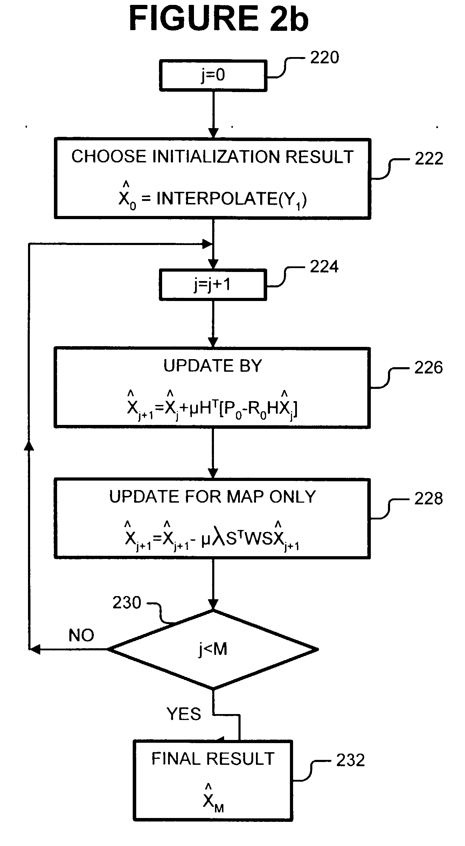

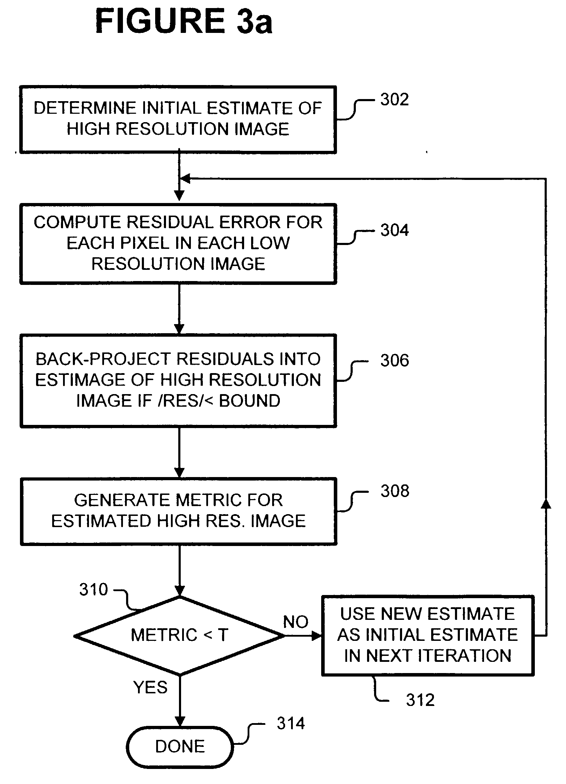

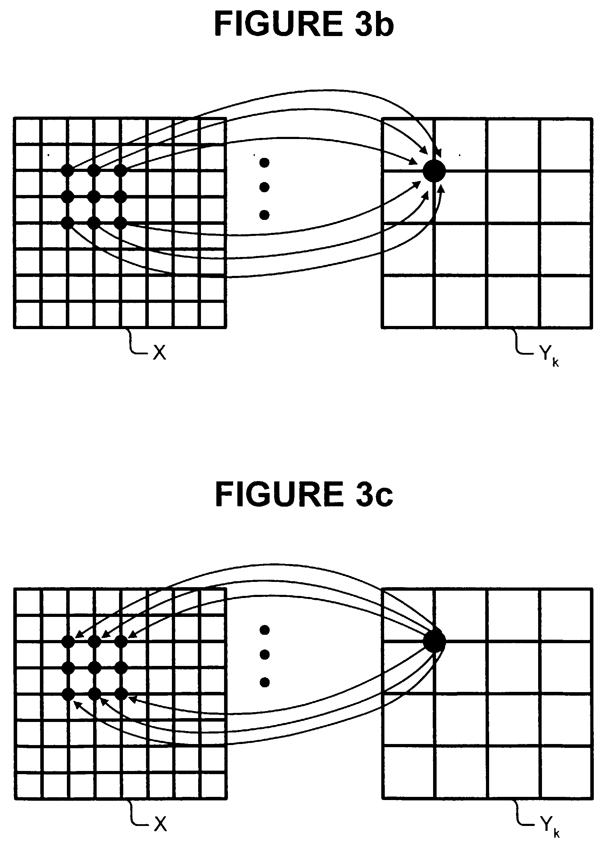

The high resolution image X may be estimated from multiple low resolution representations $Y_1, \ldots Y_k, \ldots Y_N$ by using an estimation algorithm such as a POCS based, an ML based or a MAP based algorithm. Figures 2a and 2b illustrate the use of both the ML based and MAP based estimation algorithms, while Figures 3a, 3b and 3c illustrate the use of the POCS based estimation algorithm. By using any of these algorithms to estimate the high resolution image, the true resolution of the scanner can be improved without increasing the cost of the scanner's sensor array or imaging optics.

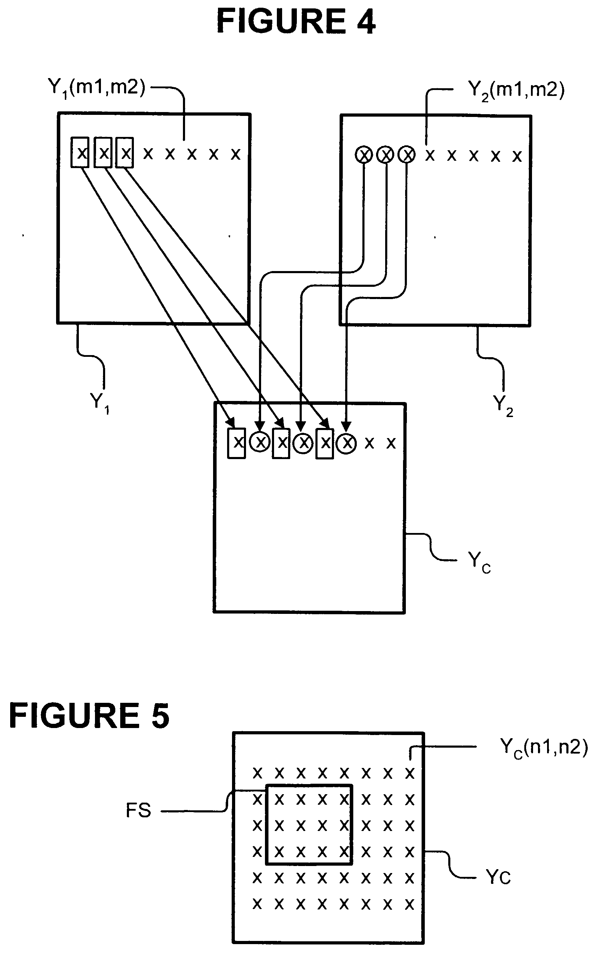

In the alternative, the high resolution image X may be estimated from two low resolution representations $Y_1$ and $Y_2$ by using an IDE algorithm. Figures 4 and 5 illustrate the use of the IDE algorithm.

Reference is now made to Figures 2a and 2b. The ML based estimation algorithm is based on minimizing the error between a simulated high resolution image X and a number N of low resolution scanned images $Y_1$ to $Y_N$. Thus,

$$X_{min} = \operatorname*{ArgMin}_{X} \left\{ \sum_{k=1}^{N} [Y_k - D_k H_k F_k X]^T [Y_k - D_k H_k F_k X] \right\}$$

which implies

$$\sum_{k=1}^{N} (D_k H_k F_k)^T [Y_k - D_k H_k F_k X] = 0$$

which leads to

$$RX_{min} = P$$

where

$$R = \sum_{k=1}^{N} F_k^T H_k^T D_k^T D_k H_k F_k \quad \text{and} \quad P = \sum_{k=1}^{N} F_k^T H_k^T D_k^T Y_k .$$

Since the noise is assumed to be white, it drops out from the equation.

All of the images in the set may be treated as having the same blur since all of the images are produced by the same scanner. Thus $H_k = H$. Moreover, it is assumed that the blurring operator H represents a spatially shift invariant and symmetric operator. Similarly, for all of the decimation operations, $D_k = D$. Beyond these assumptions, all of the warp operators are assumed to represent pure displacement. Thus, the operator $F_k$ represents a displacement by RATIO·[dx(k), dy(k)], where RATIO is the resolution ratio specified by the user, and dx(k) and dy(k) are the displacements between $Y_1$ and $Y_k$. This value is the required increase in the resolution.

Solving the above equation can be extremely difficult. For example, if the high resolution image X is of size 1000x1000 pixels, the matrix R is a $10^6 \times 10^6$ matrix. Inverting such a large matrix R is very difficult. Alternatively, the above equation can be solved by using an iterative algorithm such as the "Steepest Descent" algorithm:

$$X_{j+1} = X_j + \mu[P - RX_j]$$

where $\mu$ is the step size, which is determined by properties of the matrix R (see D. Luenberger, "Linear and Non-Linear Programming," Addison-Wesley, 1987). This yields

$$X_{j+1} = X_j + \mu R = \sum_{k=1}^{N} F_k^T H^T D^T [Y_k - DHF_k X_j]$$

This equation can be interpreted as a set of operations directly applied in the spatial domain. The term $DHF_k X$ means that X is to be displaced by RATIO·[dx(k), dy(k)], blurred and decimated. Multiplying by $F_k^T H^T D^T$ results in interpolating by zero filling, blurring ($H = H^T$), and displacing by RATIO·[-dx(k), -dy(k)].

This equation may be further simplified by exploiting the fact that both H and $F_k$ are space invariant. Thus, these two operators commute: $H F_k = F_k H$. Therefore,

$$R = H^T [\sum_{k=1}^{N} F_k^T D^T D F_k] H = H^T R_0 H$$

and

$$P = H^T [\sum_{k=1}^{N} F_k^T D^T Y_k] = H^T P_0 .$$

In the above equations, $P_0$ represents an image of the same size as X. Moreover, if nearest-neighbor displacements are used, the matrix $R_0$ is diagonal, which means that the matrix $R_0$ is simply a mask operator on an image, which results in the storage of an additional image.

The ML based algorithm may thus be implemented in two stages. The first stage is a pre-processing stage in which motion is estimating while accumulating $P_0$ and $R_0$ (blocks 200 to 216). The preprocessing stage is shown in Figure 2a. The second stage is an iterative stage of creating the high resolution image (blocks 220 to 226 and 230 to 232). The iterative stage is shown in Figure 2b.

The aim of the preprocessing stage is to compute $P_0$ and $R_0$. These two elements may be accumulated as follows. An image index k is set to k=1 (block 200). A first low resolution image $Y_1$ is loaded and stored as a reference image (block 202). Next, the vector $P_0$ is initialized such that $P_0 = D^T Y_1$ (block 204). This is a simple interpolation of the image $Y_1$. A mask operator $R_0$ is initialized as $R_0 = D^T D$.

The image index is then updated by k=k+1 (block 206), and the next image $Y_k$ is loaded (block 208). The motion error [dx(k), dy(k)] between $Y_k$ and $Y_1$ is then estimated and stored in an array (block 210). The vector $P_0$ is then updated by

$$P_0 = P_0 + F_k^T D^T Y_k$$

(block 212). Thus, the $k^{th}$ image $Y_k$ is interpolated and displaced by the estimated motion error RATIO · [-dx(k), -dy (k)]. The negative sign indicates a transpose operation. Similarly, the mask operator $R_0$ is updated by

$R_0 = R_0 + F_k^T D^T D F_k$ (block 212). This process is repeated until all N of the input images are included (block 214). Final values of $P_0$ and $R_0$ are provided (block 216)

During the entire accumulation, only two images from the input, the vector $P_0$ and the mask $R_0$, are stored at any one time. That saves memory.

The iterative stage is then performed. An iteration count j is set to j=0 (block 220). A temporary output image $X_0$ is initialized (block 222) by, for example, performing pixel replication on the reference input image $Y_1$. The iteration count is incremented (block 224) and the temporary output image $X_j$ is updated by $X_{j+1} = X_j + \mu H^T[P_0 - R_0 H X_j]$ (block 226). The image $X_j$ is blurred and multiplied by the mask image $R_0$. The difference between $P_0$ and the above result is re-blurred and added to the current solution weighted by factor $\mu$. This process is repeated M times (block 230). In practice, performing between five and fifteen iterations will produce a satisfactory image $X_M$ (block 232).

In the above iterative process, the input images are not used. Instead, $P_0$ is used and, therefore, temporal memory is saved. A number of additional shortcuts may be taken to estimate the high resolution image. For example, since one image is served as a reference and other images are compared to it, using a gradient based motion estimation, a reference pyramid and x and y derivatives may be computed only once.

Figures 2a and 2b also show the MAP based algorithm, which is essentially the same as the ML based algorithm, except that a probability based value $\lambda S^T W S$ is added to the penalty function (block 228). Thus, the matrix R becomes

$$R = H^T R_0 H + \lambda S^T W S$$

where S is a Laplacian filter, W is a weight matrix that enables spatially adaptive smoothing, and $\lambda$ is smoothness strength in the overall recovery process. A value for $\lambda$ may be chosen empirically. Thus, the updated temporary output image $X_{j+1}$ is updated as follows:

$$\hat{X}_{j+1} = X_{j+1} - \mu \lambda S^T W S \hat{X}_{j+1}$$

Reference is now made to Figures 3a, 3b and 3c, which illustrate the use of the POCS based estimation algorithm. The POCS based estimation algorithm involves the use of a plurality of closed convex constraint sets within a well-defined vector space that contain the high resolution image. An estimate of the high resolution image becomes a point in the intersection of these constraint sets. The estimate is determined by projecting an arbitrary initial estimate onto the constraints set iteratively.

A convex constraints set could be generated for each pixel (a,b) in the high resolution image X. For example, a constraint set for each pixel (a,b) in the estimated high resolution image X could be modeled as

$$/Y_k D H F_k X/_{(a,b)} < \delta$$

where $/\cdot/$ is the absolute value operator, (a,b) indicates pixel (a,b) of the absolute value of the residual image, and $\delta$ is a bound. Resulting is a linear equation for each pixel in each low resolution image $Y_k$.

The bound $\delta$ determines the statistical confidence that the high resolution image is a member of the constraint set. The high resolution image that is ultimately generated will satisfy each constraint set. For example, four images, each having a resolution of 512x512 pixels, would yield 512x512x4 equations. A high resolution image could be generated by solving the equations; however solving such a large number of equations would be extremely difficult. The POCS based estimation algorithm offers an efficient method of estimating the high resolution image from a large number of equations. Therefore, the following POCS based estimation algorithm may be used.

First, an initial estimate of the high resolution image is generated (block 302). The initial estimate may be generated in a similar manner as the initial estimate $X_0$ of the ML based algorithm.

A residual term is computed for each pixel in each low resolution image (block 304). The residual term indicates whether or not the observation could have been formed from the current high resolution image estimate (within the error bound $\delta$). The residual term RES may be computed by modeling a low resolution image from the high resolution image and taking the difference. For example,

$$RES(a,b) = [Y_k\text{-}DHF_kX](a,b)$$

See Figure 3b. The lines in Figure 3b represent motion compensation.

Each residual error RES in which $/RES/>\delta$ is then back-projected onto the current high resolution image, thereby forming a new estimate of the high resolution image that does belong to the constraint set and therefore could have given rise to the observation within the bound $\delta$ (block 306). Each back-projection may be performed by using a projection operator, which maps an arbitrary point within the space to the closest point within the constraint set. See Figure 3c. The lines in Figure 3c also represent motion compensation.

A metric is generated for the estimated high resolution image (block 308). The metric could be an amplitude projection.

If the metric is greater than a threshold (block 310), another iteration is performed, now using the current estimated high resolution image as the initial estimate (block 312) and returning to block 304. If the metric is less than the threshold (block 310), the iterations are stopped, whereby the final estimated high resolution image has been obtained (block 314). These iterations should be performed until the estimated high resolution image satisfies all of the constraints in the constraints set.

Thus, in blocks 304 to 314, an estimate of the high resolution image may be iteratively obtained after several passes by using projections from all of the low resolution images. Instead of generating a metric and comparing the metric to a threshold, the iterations may be performed until each estimate of the high resolution image lies within the intersection of all of the constraint sets (that is, $/RES/<\delta$ for each pixel in each low resolution image).

Reference is now made to Figures 4 and 5, which illustrate the use of the IDE algorithm. The IDE algorithm is a faster algorithm that uses two scans and linear filtering to create a high-resolution representation X from two low-resolution representations. Figure 4 shows that sample values $Y_1(m1, m2)$ and $Y_2(m1, m2)$ of first and second image representations $Y_1$ and $Y_2$ are combined into a more densely sampled, composite representation $Y_C$. The composite representation $Y_C$ may be formed by interleaving the two low-resolution representations $Y_1$ and $Y_2$. For example, a 600x600 dpi composite image could be formed from two low-resolution 300x600 dpi images.

Figure 5 shows that the composite representation $Y_C$ is then convolved with an NxM filter support FS as follows to produce the high-resolution representation X:

$$X(n1, n2) = \sum_{i=-N}^{N} \sum_{j=-M}^{M} Yc(n1 + i, n2 + j)w(i, j)$$

where X(n1, n2) is a pixel in the high-resolution representation X; $Y_C$(n1+i, n2+j) is a pixel in the composite representation $Y_C$, and w(i,j) is a weighting coefficient.

In the following description of the IDE algorithm, notations will be changed. If the composite representation is supplied as an input matrix X[N], a resulting output matrix Y[N] will be the high resolution representation.

To simplify the following discussion of the IDE algorithm, vector notation will be utilized. Vectors and matrices will be shown in bold print to distinguish them from scalar quantities. The measured intensity values in each image plane will be denoted by $x_p[n_1,n_2]$. Here, $n_1$ and $n_2$ are indicies which denote the position of the pixel in the $p^{th}$ image plane and $x_p$ is the intensity value measured for that pixel. The quantity $[n_1,n_2]$ is a two-dimensional integer valued vector which will be denoted by **n**. The entire set of image planes can then be represented as a set of vectors **x[n]** where

$$x[n] = \begin{bmatrix} x_1[n_1, n_2] \\ x_2[n_1, n_2] \\ \vdots \\ x_Q[n_1, n_2] \end{bmatrix}$$

The output image can likewise be represented as a set of vectors.

$$\mathbf{y[m]} = \begin{bmatrix} y_1[m_1, m_2] \\ y_2[m_1, m_2] \\ \vdots \\ y_Q[m_1, m_2] \end{bmatrix}$$

In general, the output image will have a spatial resolution that is different from the input image. The input image may be viewed as consisting of a set of "super pixels" $\mathbf{x[n]}$. Likewise, the output image is a set of pixels $\mathbf{y[m]}$. The number of output pixels in the vertical and horizontal directions corresponding to each input pixel will be denoted by $\lambda_1$ and $\lambda_2$, respectively. In the case of a Bayer pattern, the demosaicing task is usually understood as having $\lambda_1 = \lambda_2 = 2$.

The output pixels are related to the input pixels by a linear operator that operates on vectors derived from $\mathbf{x[n]}$ and $\mathbf{y[m]}$. These intermediate vectors take into account the difference in resolution and the fact that each output pixel depends on more than one input super pixel. The intermediate vector corresponding to $\mathbf{y[m]}$ will be denoted by $\zeta[\mathbf{n}]$ and has the same sampling density as $\mathbf{x[n]}$:

$$\varsigma[\mathbf{n}] = \begin{bmatrix} \mathbf{y}[\Lambda(\mathbf{n} + \delta_1)] \\ \mathbf{y}[\Lambda(\mathbf{n} + \delta_2)] \\ \vdots \\ \mathbf{y}[\Lambda(\mathbf{n} + \delta_{\lambda_1\lambda_2})] \end{bmatrix}.$$

Here, the matrix $\Lambda$ is defined by

$$\Lambda = \begin{bmatrix} \lambda_1 & 0 \\ 0 & \lambda_2 \end{bmatrix}$$

In the case of the Bayer pattern, $\delta_1 = [0,0]$, $\delta_1 = [1/2,0]$, $\delta_1 = [0,1/2]$, and $\delta_1 = [1/2,1/2]$. The vectors $\zeta[\mathbf{n}]$ will be referred to as the output polyphase components.

It is assumed that each polyphase output vector depends on a finite number of input super pixels. In general, the input super pixels that contribute to a particular polyphase output vector $\zeta[\mathbf{n}]$ will be located in a neighborhood around [n]. As will be explained in more detail below, the precise pixels will depend upon the nature of the imaging device. The input super pixels that contribute to the polyphase output vector at $\mathbf{n}$ may be identified by a set of displacement vectors $\mathbf{k}_1, \mathbf{k}_2, ..., \mathbf{k}_K$. That is, $\zeta[\mathbf{n}]$ depends on $\mathbf{x[n+k_1]}, \mathbf{x[n+k_2]}, ..., \mathbf{x[n+k_K]}$. $\zeta[\mathbf{n}]$ is assumed to be linearly dependent on the input super pixels. The set of displacement vectors $\mathbf{k}_1, \mathbf{k}_2, ..., \mathbf{k}_K$ may be independent of $\mathbf{n}$, and is arranged in a $k_1 \times k_2$ rectangular grid

The linear relationship can be most easily defined in terms of a vector $\xi[\mathbf{n}]$ which includes all of the super pixels on which the output polyphase vector $\zeta[\mathbf{n}]$ depends, i.e.,

$$\xi[\mathbf{n}] = \begin{bmatrix} \mathbf{x}[\mathbf{n} + \mathbf{k}_1] \\ \vdots \\ \mathbf{x}[\mathbf{n} + \mathbf{k}_K] \end{bmatrix}$$

In terms of this vector, the relationship between $\zeta[\mathbf{n}]$ and $\xi[\mathbf{n}]$ may be written as matrix multiplication:

$$\zeta[n] = T\xi[n]$$

where $\mathbf{T}$ is a $(Q\lambda_1\lambda_2)\mathbf{x}(PK_1K_2)$ matrix.

The matrix, $\mathbf{T}$, depends on a number of factors. Some of these are fixed for a particular imaging device and some depend on the particular manner in which the imaging device is being utilized. For example, the physical properties of the sensing array such as the spectral sensitivity of the pixels, the mosaic pattern, and the number of pixels typically do not vary from image to image. In contrast, the optical properties of the imaging device may vary from image to image. In addition, the spectral properties of the illumination source may vary from image to image (daylight, flash, incandescent light, etc.).

In addition, the statistics of the image being captured may be taken into account through $\mathbf{T}$. For example, images or portions of images having a high content of vertical and horizontal edges can be processed with a different matrix than images lacking such features and thereby improve the output image quality.

In imaging devices that have a variable output format, the resolution of the final image can be set using a different $\mathbf{T}$ matrix. Alternatively, a single $\mathbf{T}$ matrix may be utilized for all resolutions and then the desired output image determined by resampling the fixed resolution image. Similarly, the number of output color planes may be altered by using different $\mathbf{T}$ matrices or by resampling a single color format to generate an alternate color representation. In general, properties that alter the dimension of the $\mathbf{T}$ matrix are preferably handled by using a fixed $\mathbf{T}$ matrix and then re-sampling the final image in low cost imaging devices.

If the number of different $\mathbf{T}$ matrices is relatively small, the coefficients of the $\mathbf{T}$ matrix can be determined by training the system on known images. For each possible $\mathbf{T}$ matrix, images of a number of known scenes are taken using the imaging device. The coefficients of the $\mathbf{T}$ matrix are then computed so as to minimize the difference between the image computed from the sensor input and the known scene images. Such optimization computations are well known to those skilled in the art, and hence, will not be discussed in detail here.

If the variation in some parameter is relatively smooth, the $\mathbf{T}$ matrices need only be computed for a discrete number of values of the parameter. The correct $\mathbf{T}$ matrix for the non-computed variable parameter values can then be computed by interpolation of the computed $\mathbf{T}$ matrices.

In some circumstances it may be possible to compute appropriate T matrices from training images. Unfortunately, this approach is limited to applications in which the number of different imaging conditions and hence the number of different T matrices which could be required is relatively small. A T matrix may be computed for an arbitrary imaging device (i.e. arbitrary color sensitivities, sensor locations and optical characteristics) and under arbitrary illumination, subject to a particular statistical model for the underlying image, which has been found to give particularly good reconstructed image quality. As will be seen, the statistical image model is governed by only a few parameters. In more advanced applications, these parameters may be adjusted either locally, or globally, to match statistical properties of the image, such as edge orientation, which can be estimated by various methods.

The following describes the parameters of the image formation process which maps the original scene into the source image super-pixels x[nl - The image formation model depends upon deterministic quantities which can, at least in theory, be measured. These quantities include:

- The scene illuminant spectral power density $1(\lambda)$.

- The color spectral response functions $r_p(\lambda)$, for each input image plane p.

- The Point Spread Function $h_p(\lambda, s)$ associated with the combined effects of the optical transfer function and sensor integration behavior for input image plane p. Here, s=[s1, s2] is the spatially continuous argument of the Point Spread Function (PSF), at each wavelength $\lambda$. Note that the PSFs implicitly include the effect of relative displacements between the different input image planes. In the following, the PSF is referenced only through its Fourier Transform $h_p'(\lambda\omega)$, where the spatial frequency vector *w=[ w1, w2]* is normalized so that *w1 = w2 = $\pi$* at the Nyquist frequency of the input super-pixels. Thus, the Nyquist frequency of the original sensor array corresponds to *w =*

*[λ₁π]*.

Rather than modeling the image formation process directly in terms of the desired output image super-pixels, it is helpful to choose an intermediate representation in terms of surface spectral-reflectance, since this is well known to be better behaved from a statistical perspective than the scene radiance itself and hence more amenable to statistical modeling. Specifically it is helpful to assume that the spectral reflectance of the original scene can be perfectly represented as a linear combination of a limited number of fixed basis functions, $b_1(\lambda), b_2(\lambda), ... b_S(\lambda)$, where S is usually chosen to be three or four, but may be larger if desired. The actual output vectors **y[m]** may be expressed in terms of the intermediate spectral reflectance vectors **z[m]** as

$$
\mathbf{y[m]} = \mathbf{T_{out}} \ \mathbf{z[m]}
$$

$$
= \begin{pmatrix}
\int_0^\infty d_1(\lambda)l(\lambda)b_1(\lambda)d\lambda & \int_0^\infty d_1(\lambda)l(\lambda)b_2(\lambda)d\lambda & \cdots & \int_0^\infty d_1(\lambda)l(\lambda)b_S(\lambda)d\lambda \\
\int_0^\infty d_2(\lambda)l(\lambda)b_1(\lambda)d\lambda & \int_0^\infty d_2(\lambda)l(\lambda)b_2(\lambda)d\lambda & \cdots & \int_0^\infty d_2(\lambda)l(\lambda)b_S(\lambda)d\lambda \\
\vdots & \vdots & \ddots & \vdots \\
\int_0^\infty d_Q(\lambda)l(\lambda)b_1(\lambda)d\lambda & \int_0^\infty d_Q(\lambda)l(\lambda)b_2(\lambda)d\lambda & \cdots & \int_0^\infty d_Q(\lambda)l(\lambda)b_S(\lambda)d\lambda
\end{pmatrix} \cdot \mathbf{z[m]}
$$

where $d_q(\lambda)$ is the spectral response of the $q^{th}$ display spectral response function. For example, if the objective is to recover an XYZ image, then Q should be set to 3 and $d_1(\lambda)$ to $d_3(\lambda)$ should be set to the standard 1931 CIE tri-stimulus functions As another example, if the objective is to recover an image with the same color characteristics as the different color filters on the physical sensor array, then Q should be set to the number of unique input response functions $r_p(\lambda)$ and there should be a one-to-one correspondence between these unique $r_p(\lambda)$ and the $d_q(\lambda)$. In this framework, the chief goal is to compute the $(S\lambda_1\lambda_2)x(PK_1K_2)$ reconstruction matrix Tref, which maps the neighborhood of input super-pixels $\zeta'[\mathbf{n}]$ to the corresponding spectral-reflectance super-pixel,

$$
\varsigma'[\mathbf{n}] = \begin{bmatrix}
z[\Lambda(\mathbf{n} + \delta_1)] \\
z[\Lambda(\mathbf{n} + \delta_2)] \\
\vdots \\
z[\Lambda(\mathbf{n} + \delta\lambda_1 \lambda_2]
\end{bmatrix}
$$

The final $(S\lambda_1\lambda_2)x(PK_1K_2)$ reconstruction matrix is then formed by simple matrix multiplication:

$$
T = \begin{pmatrix}
T_{OUT} & 0 & 0 & \cdots & 0 & 0 \\
0 & T_{OUT} & 0 & \cdots & 0 & 0 \\
\vdots & \vdots & \ddots & & \vdots & \vdots \\
0 & 0 & 0 & \cdots & 0 & T_{OUT}
\end{pmatrix}
$$

The linear image formation model may now be expressed compactly as

$$
\hat{x}(\omega) = \hat{v}(\omega) + \sum_{\omega_a \in \Omega_u(\omega)} H(\omega_a)\hat{z}(\Lambda^{-1}\omega_a)
$$

where

$\hat{x}(\omega)$ is the Discrete Space Fourier Transform of the input image x[n];
$v(\omega)$ is the Discrete Space Fourier Transform of the sampling noise vector sequence;

$\hat{z}(\omega)$ is the Discrete Space Fourier Transform of the spectral reflectance vector z[m];

$\Omega_a(\omega)$ is the set containing all $\lambda_1\lambda_2$ aliasing frequencies associated with the sampling of the high resolution output image on grid [m] onto the input super-pixel grid [n], for each $\omega\in[-\pi,\pi]^2$; and

H(w) is the P x S image formation matrix,

$$\mathbf{H}(\omega) = \begin{pmatrix} \int_0^\infty r_1(\lambda)l(\lambda)b_1(\lambda)\hat{h}_1(\lambda,\omega)d\lambda & \cdots & \int_0^\infty r_1(\lambda)l(\lambda)b_S(\lambda)\hat{h}_1(\lambda,\omega)d\lambda \\ \int_0^\infty r_2(\lambda)l(\lambda)b_1(\lambda)\hat{h}_2(\lambda,\omega)d\lambda & \cdots & \int_0^\infty r_2(\lambda)l(\lambda)b_S(\lambda)\hat{h}_2(\lambda,\omega)d\lambda \\ \vdots & \ddots & \vdots \\ \int_0^\infty r_P(\lambda)l(\lambda)b_1(\lambda)\hat{h}_P(\lambda,\omega)d\lambda & \cdots & \int_0^\infty r_P(\lambda)l(\lambda)b_S(\lambda)\hat{h}_P(\lambda,\omega)d\lambda \end{pmatrix}$$

In order to compute an appropriate solution to the image reconstruction problem, a statistical model for the sampling noise $v(\omega)$ and the spectral reflectance $z(\omega)$ are introduced. In this discussion, Wide Sense Stationary Gaussian models are assumed, which are characterized which are characterized entirely by the covariance matrices

$$C_V(\omega) = E\left[\hat{v}(\omega)\cdot\hat{v}(\omega)^*\right]$$

and

$$C_z(\omega) = E\left[\hat{z}(\omega)\cdot\hat{z}(\omega)^*\right]$$

The noise covariance matrix will usually be a constants $C_v(\omega) =\sigma^2 I$ for all $\omega$, corresponding to white noise, but other models may be used if appropriate. The following parametric model is used for the reflectance covariance matrix

$$C_z(\omega) = C_z^0 \cdot \|\Gamma\omega\|^{-\frac{\rho}{10}}$$

where $C_z^0$ is a constant S x S covariance matrix, $\rho$ is a frequency roll-off parameter, which is usually selected in the range 20 to 30 dB/decade, and $\Gamma$ is a. 2 x 2 "shape matrix". The terms in the above expression which follow the constant covariance matrix $C_z^0$ describe a scalar envelope function whose contours are ellipses in the frequency domain. The orientation and aspect ratio of these elliptic contours *may* be explicitly controlled by means of the $\Gamma$ matrix. For a circular cross-section, the identity matrix $\Gamma= I$ may be used.

The statistical model represented by $C_z$ plays an extremely important role in determining the quality of the final reconstructed images. The parametric model described above may be justified on a number of grounds; most notably, the model is scale-invariant, which means that on average the statistics of scenes should not depend upon how far the camera is located from the scene. This scale-invariance property is important because in practical imaging applications, information about the absolute scale of objects in the scene is rarely available. Also, there is significant empirical evidence for this scale invariance property in natural scenes, with a frequency roll-off factor p of about 20 dB/decade.

A key objective is to compute the $(S\lambda_1\lambda_2)x(PK_1K_2)$ matrix $T_{ref}$ from which P is easily recovered. The ensuing discussion concerns the derivation of an optimal Linear Minimum Mean Squared Error (LMMSE) estimator Tref subject to the models described in the previous two sections. The formula for such an estimaor is well known. Specifically,

$$T_{ref} = Z X^{-1}$$

where Z is the $(S\lambda_1\lambda_2)x(PK_1K_2)$ cross-covariance matrix

$$Z = E\left[\varsigma'[n] \cdot \xi[n]'\right]$$

and X is the $(PK\lambda_1PK_2)x(PK_1K_2)$ dimensional auto-covariance matrix.

$$X = E\left[\xi[n] \cdot \xi[n]'\right]$$

In fact, X has the following Toeplitz block-Toeplitz structure:

$$X = \begin{pmatrix} \underline{\underline{X}}[0] & \underline{\underline{X}}[1] & \cdots & \underline{\underline{X}}[K_2 - 1] \\ \underline{\underline{X}}[-1] & \underline{\underline{X}}[0] & \cdots & \underline{\underline{X}}[K_2 - 2] \\ \vdots & \vdots & \ddots & \vdots \\ \underline{\underline{X}}[1 - K_2] & \underline{\underline{X}}[2 - K_2] & \cdots & \underline{\underline{X}}[0] \end{pmatrix}$$

where each block $\underline{X}[T_2]$ has the Toeplitz form

$$X[l2] = \begin{pmatrix} \underline{\underline{X}}[0,l_2] & \underline{\underline{X}}[1,l_2] & \cdots & \underline{\underline{X}}[K_2 - 1,l_2] \\ \underline{\underline{X}}[-1,l_2] & \underline{\underline{X}}[0,l_2] & \cdots & \underline{\underline{X}}[K_2 - 2,l_2] \\ \vdots & \vdots & \ddots & \vdots \\ \underline{\underline{X}}[1 - K_2,l_2] & \underline{\underline{X}}[2 - K_2,l_2] & \cdots & \underline{\underline{X}}[0,l_2] \end{pmatrix}$$

and each block $\underline{X}[l_1,l_2]$ is a PxP source super-pixel covariance matrix, given by

$$X[l] = E\left[x[n] \cdot x[n+1]'\right]$$

The $(S\lambda_1\lambda_2)$ x P matrix Z also has a doubly-nested block structure. Specifically,

$$Z = \left(\underline{Z}\left[-\left[\frac{K_2}{2}\right]\right] \quad \underline{Z}\left[1 - \left[\frac{K_2}{2}\right]\right] \quad \cdots \quad \underline{Z}\left[\left[\frac{K_2 - 1}{2}\right]\right]\right)$$

where

$$Z[l_2] = \left(\underline{Z}\left[-\left[\frac{K_2}{2}\right],l_2\right] \quad \underline{Z}\left[1 - \left[\frac{K_2}{2}\right],l_2\right] \quad \cdots \quad \underline{Z}\left[\left[\frac{K_2 - 1}{2}\right],l_2\right]\right)$$

and the $(S\lambda_1\lambda_2)$ x P sub-block matrices $\underline{Z}[1]$ are given by

$$Z[l] = E\left[\varsigma'[n] \cdot \xi[n+1]'\right]$$

In order to compute $T_{ref}$, then, it is sufficient to compute the matrices $\underline{X}[1]$ for $[1] = [l_1,l_2]$ in the range $-K_i < l_i < K_i$, and the matrices $\underline{Z}[1]$ for $[1] = [l_1,l_2]$ in the range

$$-\left[\frac{k_i}{2}\right] \leq l_i \leq \left[\frac{k_{i-1}}{2}\right]$$

after which the contents of X and Z may be filled in and used to evaluate $T_{ref} = Z\,X^{-1}$. The key to efficient computation of Tref lies in efficiently computing the matrices $\underline{X}[1]$ and $\underline{Z}[1]$.

It turns out that these matrices may be efficiently computed by exploiting Parseval's Relationship. Specifically,

$$\underline{X}[-1] = \frac{1}{(2\pi)^2} \int_{-\pi}^{\pi} d\omega_1 \int_{-\pi}^{\pi} d\omega_2 e^{j\omega'l} C_x(\omega)$$

and

$$\underline{Z}[-1] = \frac{1}{(2\pi)^2} \int_{-\pi}^{\pi} d\omega_1 \int_{-\pi}^{\pi} d\omega_2 e^{j\omega'l} C_{\zeta'x}(\omega)$$

where the frequency auto- and cross-covariance matrices, $C_X(\omega)$ and $C_{\zeta'X}(\omega)$ are found from

$$C_x(\omega) = C_\nu(\omega) + \sum_{\omega_a \in \Omega_a(\omega)} \left( H(\omega_a) C_z(\omega_a) H(\omega_a)^* \right)$$

and

$$C_{\zeta'x}(\omega) = \sum_{\omega_a \in \Omega_a(\omega)} \left( \Phi(\omega_a) C_z(\omega_a) H(\omega_a)^* \right)$$

Here, $\Phi(\omega)$ is the $(S\lambda_1\lambda_2) \times S$ matrix of phase shifts,

$$\Phi(\omega) = \begin{pmatrix} e^{j\omega'\delta_1} I^{(S\lambda)} \\ e^{j\omega'\delta_2} I^{(S)} \\ \vdots \\ e^{j\omega'\delta_{\lambda_1\lambda_2}} I^{(S)} \end{pmatrix}$$

corresponding to the relative displacements of each of the output polyphase components.

In order to compute the matrices $\underline{X}[1]$ and $\underline{Z}[1]$, $C_X(\omega)$ and $C_{\zeta'X}(\omega)$ are evaluated at a finite number of frequencies $\omega \in [-\pi,\pi]^2$ and then the Inverse Fourier Transform (IFT) integrals of $\underline{X}[1]$ and $\underline{Z}[1]$ are approximated numerically. There are various approaches to determining the best set of frequency points at which to evaluate $\underline{X}[1]$ and $\underline{Z}[1]$ and interpolating between these points during the numerical integration procedure.

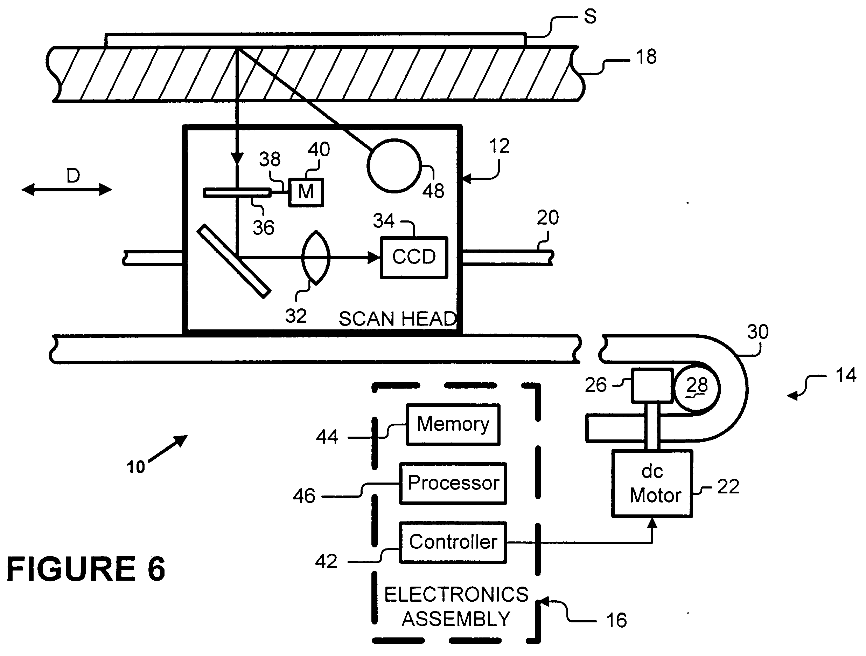

Reference is now made to Figure 6, which shows a flatbed scanner 10 according to the present invention. The flatbed scanner 10 includes a scan head 12, a dc motor drive assembly 14, an electronics assembly 16, a glass pane 18 and a housing (not shown). The glass pane 18 and the housing form an enclosure inside which the scan head 12, the motor drive assembly 14 and the electronics assembly 16 are mounted. The glass plane 18 also defines a scanning plane.

The dc motor drive assembly 14 includes a pair of slider rods 20 for guiding the scan head 12 in a linear direction along the glass pane 18, and a dc motor 22 and transmission for moving the scan head 12 along the slider rods 20. The dc motor 22 can be a brush or brushless dc motor. The transmission is typical to flatbed scanners: a motor shaft 24 turns a worm gear 26, which drives a gear 28, which turns a timing belt 30. The timing belt 30 moves the scan head 12 in a first, scanning direction, which is indicated by an arrow D. The sensor array 34 moves with the scan head 12 in the scanning direction D.

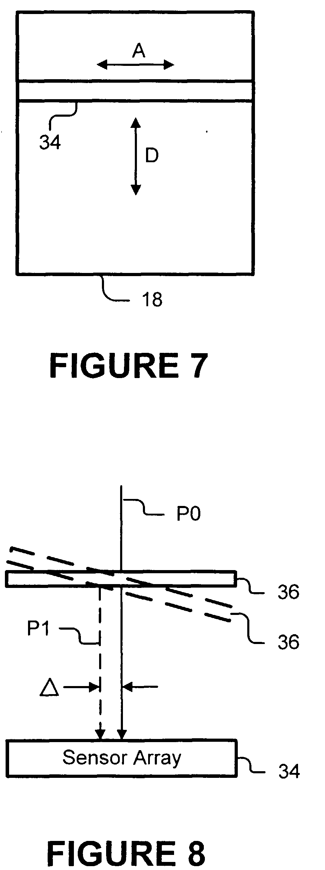

Referring additionally to Figure 7, the scan head 12 includes imaging optics 32 and a sensor array 34. The sensor array 34 might be a CCD array having a resolution of 300 dpi. The CCD array of the scan head 12 might include three color sensors at each pixel location or CCD cell. The cells extend in a second direction indicated by the arrow A. A linear response of the sensor array 34 is preferred but not required.

The scan head 12 further includes a device that induces intentional motion error between successive scans. The motion error may be a global translational or affine motion between the successive scans.

A number of different approaches may be used to induce the motion error. One such approach is shown in Figures 6 and 8. A light-transmissible plate 36 is placed in an optical path between the sensor array 34. The plate 36 is movable between a first position a second position. During a first scan, the plate 36 is moved to the first position by a second motor 38 and linkage 40. Light reflected at the scanning plane is transmitted by the plate 36 without changing the direction of the beam light (i.e., the light is normal to the light-receiving surface of the plate 36), and the transmitted light impinges a light-receiving surface of the sensor array 34. The path of the light transmitted by the plate 36 during the first scan is indicated by the solid line P0. During a second scan, the plate 36 is moved or tilted to the second position. When moved to the second position, the plate 36 changes the direction of the light path, as indicated by the dashed line P1. Thus, the sensor array 34 "sees" different images during the first and second scans. The plate 36 may be moved to produce a motion error $\Delta$ between fractional values of 0.35 and 0.65 pixels (e.g., 0.40 pixels, 1.40 pixels).

The plate 36 may be made of an optical quality glass. The material for the plate 36 is homogenous such that direction changes are relatively uniform across the plate 36. It would be undesirable for the beam P0 to be deflected by one degree at one portion of the plate 36 and by two degrees at another portion of the plate 36. Dimensions of the plate 36 could include, for example, a thickness of one millimeter, a length of one or two centimeters, and a width of one centimeter.

The electronics assembly 16 includes a controller 42 for controlling the operation of the scanner 10. Among its functions, the controller 42 controls the dc motor 22 to move the scan head 12 along the slider rods 20, and the controller 42 controls the second motor 38 and linkage 40 to move the plate 36 between the first and second positions. The controller 42 can control the second motor 38 and linkage 40 to cause a precise motion error. In the alternative, the motion error need not be controlled precisely. Instead, the plate 36 may be moved to cause an approximate subpixel error, and the precise motion error A could be determined by a motion estimation algorithm in software (e.g., a host computer) or hardware (e.g., the controller 42).

To generate a high resolution image, a sheet S of paper is positioned atop the glass pane 18, and a host (e. g., a personal computer) commands the electronics assembly 16 to scan the sheet S. Under control of the controller 42, the second motor 38 and linkage 40 move the plate 36 to the first position, and the dc motor drive assembly 14 moves the scan head 12 along the slider rods 20 to an initial position (e.g., a wall) and then starts moving the scan head 12 along the slider rods 20. A fluorescent bulb 48 in the scan head 12 is turned on to illuminate a portion of the sheet S with white light, and the imaging optics 32 focuses an image of the illuminated portion onto the sensor array 34. The sensor array 34 is exposed to, and integrates, a line of pixels at a time, and the electronics assembly 16 processes signals generated by the sensor array 34 and buffers a first representation of the scanned image in memory 44.

When using the ML, MAP or POCS based algorithms, a total of four scans may be performed. For example, one of the scans does not have any motion error, another scan has a motion-induced error of 0.5 pixels in the second direction A only, another scan has a motion-induced error of 0.5 pixels in the scanning direction D only, and another scan has a motion-induced error or 0.5 pixels in both the scanning and second directions D and A.

The motion errors could be induced by the plate 36 alone or by a combination of the plate 36 and offsetting the initial position of the scan head 12. For example, the plate 36 may be used to induce motion error in the scanning and second directions D and A; or the plate 36 may be used to induce motion error in the second direction A and the dc motor drive assembly 14 may be used to induce motion error in the scanning direction D.

Each representation of the scanned image is buffered in the memory 44. After all four scans have been performed, the four representations are processed into a higher resolution representation. Processing can be performed by an on-board processor 46. In the alternative, the low-resolution representations may be sent to the host, which would generate the high-resolution image.

When using the IDE algorithm, a total of two scans are performed, there being a motion error between the two scans. After the second scan has been completed, first and second representations are processed into the higher resolution representation in a single pass

The memory 44 also stores the Point Spread Function of the scanner 10. The Point Spread Function of the scanner can be measured directly. For example, interferometrically generated sinusoidal imaging targets could measure the Point Spread Function. See, for example, J. Grievenkamp and A. Lowman, "Modulation transfer function measurement of sparse-array sensors using a self-calibrating fringe pattern," *Applied Optics,* Vol. 33, No. 22, pp. 5029-36, August 1994; and S. Johansson et al., "Experimental MTF measurements of CCD using an interferometrically generated test pattern," *Journal of Imaging Science,* Vol. 35, No. 5, pp 320-25, September-October 1991.

In the alternative, the Point Spread Function could be estimated from Line Spread Functions ("LSF") of the sensor array 34. Estimating the PSF from the LSF can be done in any number of ways. See, for example, A. Bewsher and I. Powell, "Optical transfer function measurement facility for aerial survey cameras," *Applied Optics,* Vol. 33, No. 28, pp. 6573-77, October 1994.

The Line Spread Function possesses a useful number of properties from a measurement standpoint. Fine lines on an image target can closely approximate an impulsive line, while providing sufficient illumination to achieve meaningful sensor responses. The Line Response Function is a one-dimensional function; therefore, accurate, densely sampled Line Response Function measurements would appear to be much more feasible from a single exposure to some appropriate imaging target. Additionally, the simple geometry of a linear stimulus could be exploited to recover precise relative displacements between the line and the sensor array 34.

Thus disclosed is an invention that increases true resolution of a scanner without making hardware changes such as increasing the quality of the sensor array or imaging optics of the scanner. For example, a 300 dpi resolution could be obtained with 100 dpi optics.

The IDE, ML based, MAP based and POC based estimation algorithms all provide an optimal reconstruction for the high resolution image. However, the IDE algorithm needs only two low resolution images and a single pass to generate a high resolution image. Therefore, the IDE algorithm is faster than the ML based, MAP based and POC based estimation algorithms.

These algorithms are not restricted to any specific motion. These algorithms may be applied to pure translational/affine warp functions, as well as any other kind of warp function.

If a plate 36, second motor 38 and linkage 40 are added, little will be added to the cost of manufacturing the scanner 10. If the initial position of the scan head 12 can be controlled to induce the motion error, the plate 36 and motor 38 and linkage 40 would not be needed, and the higher resolution could be obtained without an additional increase in the cost of hardware.

The present invention is not limited to the specific embodiments described and illustrated above. For example, the invention is not limited to ML based, POCS based and MAP based estimation algorithms. Other estimation algorithms such as Bayesian based algorithms and robust estimation based algorithms may be used.

The processing could be performed on-board the scanner 10. In the alternative, the processing could be performed off-board the scanner by an external device such as the host computer.

Optical elements other than a flat, transmissive plate 36 could be used. Optical elements such as prisms or diffraction gratings could be used instead.

The location of the plate 36 is not limited to.the optical path between the glass pane 18 and the sensor array 34. The plate 36 could be placed along the optical path between the light source 48 and the glass pane 18.

Accordingly, the invention is not limited to the specific embodiments described and illustrated above. Instead, the invention is construed according to the claims that follow.

The disclosures in United States patent application nos. 09/181,346 and 09/334,097, from which this application claims priority, and in the abstract accompanying this application are incorporated herein by reference.

**Claims**

1.    An imaging system (10) comprising:

   a scan head (12) for generating a plurality of lower resolution image representations;
   a processor (44); and
   memory (46) encoded with a program for instructing the processor (44) to use a super resolution algorithm to estimate a higher resolution representation from the plurality of lower resolution image representations, motion errors having been intentionally induced between the plurality of lower resolution representations.

2.    The system of claim 1, wherein when the system (10) has a transfer function, and wherein the processor (44) is operable to generate the higher resolution representation by iteratively estimating the higher resolution image from the plurality of first resolution representations, the motion errors and the transfer function of the scanner.

3.    The system of claim 2, wherein the processor (44) is operable to estimate the higher resolution representation by solving for Rxmin=P, wherein Xmin is the higher resolution representation.

4.    The system of claim 3, wherein $R=H^T R_0 H$ and $P=H^T P_0$, and wherein $P_0$ and $R_0$ are iteratively used to update the higher resolution representation.

5. The system of claim 3, wherein a probability based value $\lambda S^T W S$ is added to R.

6. The system of claim 2, wherein the processor (44) is operable to estimate the higher resolution representation by generating an initial estimate of the higher resolution representation; computing a residual term by modeling a low resolution image from the high resolution image; taking the difference between the modeled low resolution image and the plurality of lower resolution representations; and back-projecting each residual error when the absolute value thereof exceeds a bound, thereby forming a new estimate of the higher resolution representation that belongs to the constraint set.

7. The system of claim 1, wherein the processor (44) is operable to generate a composite representation from a first representation having a motion error and a second representation not having the motion error, the processor using the super-resolution algorithm to generate a high resolution image from composite representation.

8. The system of claim 7, wherein the processor (44) is operable to generate the high resolution representation by interleaving the first and second representations into the composite representation; and convolving the composite representation with an NxM IDE filter (FS) to produce the high resolution representation.

9. The system of claim 1, wherein the scan head (12) includes a sensor array (34), a light source (48) and at least one optical element (36) moveable to change an optical path between the light source (48) and the sensor array (34).

10. The system of claim 9, wherein a first optical light path is between the light source (48) and a scanning plane, a second optical path is between the scanning plane and the sensor array (34), and wherein the moveable optical element (36) is disposed along one of the first and second optical paths, the optical element (36) being operable to cause a change of the second optical path relative to the sensor array and thereby induce a subpixel motion error in a representation generated by the scanner during a scanning operation.

# FIGURE 1

# FIGURE 2a

```
                ┌──────────────┐      ── 200
                │     k=1      │
                └──────────────┘
                       │
                       ▼
        ┌──────────────────────────────┐   ── 202
        │  LOAD FIRST LOW RESOLUTION   │
        │         IMAGE Y₁ ·           │
        └──────────────────────────────┘
                       │
                       ▼
        ┌──────────────────────────────┐   ── 204
        │          INITIALIZE          │
        │         P₀=DᵀY₁             │
        │         R₀=DᵀD              │
        └──────────────────────────────┘
                       │
                       ▼
                ┌──────────────┐      ── 206
                │    k=k+1     │
                └──────────────┘
                       │
                       ▼
        ┌──────────────────────────────┐   ── 208
        │   LOAD NEXT LOW RESOLUTION   │
        │         IMAGE Yₖ             │
        └──────────────────────────────┘
                       │
                       ▼
        ┌──────────────────────────────┐   ── 210
        │    ESTIMATE MOTION ERROR     │
        │     BETWEEN Y₁ AND Yₖ       │
        └──────────────────────────────┘
                       │
                       ▼
        ┌──────────────────────────────┐   ── 212
        │          UPDATE BY           │
        │      P₀=P₀+FₖᵀDᵀYₖ         │
        │      R₀=R₀+FₖᵀDᵀDFₖ        │
        └──────────────────────────────┘
                       │
                       ▼
    214 ──         ◇◇◇◇◇◇◇◇
          NO     ◇         ◇
        ◄────────◇   k<N   ◇
                  ◇         ◇
                   ◇◇◇◇◇◇◇
                       │ YES
                       ▼
                ┌──────────────┐      ── 216
                │    P0&R0     │
                └──────────────┘
```

Step 200: $k=1$

Step 202: LOAD FIRST LOW RESOLUTION IMAGE $Y_1$ ·

Step 204: INITIALIZE $P_0 = D^T Y_1$, $R_0 = D^T D$

Step 206: $k = k+1$

Step 208: LOAD NEXT LOW RESOLUTION IMAGE $Y_k$

Step 210: ESTIMATE MOTION ERROR BETWEEN $Y_1$ AND $Y_k$

Step 212: UPDATE BY $P_0 = P_0 + F_k^T D^T Y_k$, $R_0 = R_0 + F_k^T D^T D F_k$

Step 214: $k < N$

Step 216: $P_0 \& R_0$

# FIGURE 2b

j=0 — 220

CHOOSE INITIALIZATION RESULT

$$\hat{X}_0 = \text{INTERPOLATE}(Y_1)$$

— 222

j=j+1 — 224

UPDATE BY

$$\hat{X}_{j+1} = \hat{X}_j + \mu H^T[P_0 - R_0 H \hat{X}_j]$$

— 226

UPDATE FOR MAP ONLY

$$\hat{X}_{j+1} = \hat{X}_{j+1} - \mu \lambda S^T W S \hat{X}_{j+1}$$

— 228

230 —

NO

j<M

YES

FINAL RESULT

$$\hat{X}_M$$

— 232

# FIGURE 3a

```
┌─────────────────────────────┐
│ DETERMINE INITIAL ESTIMATE OF │──── 302
│     HIGH RESOLUTION IMAGE     │
└─────────────────────────────┘
              │
              ▼
┌─────────────────────────────┐
│ COMPUTE RESIDUAL ERROR FOR    │──── 304
│   EACH PIXEL IN EACH LOW       │
│      RESOLUTION IMAGE          │
└─────────────────────────────┘
              │
              ▼
┌─────────────────────────────┐
│ BACK-PROJECT RESIDUALS INTO   │──── 306
│ ESTIMAGE OF HIGH RESOLUTION   │
│    IMAGE IF /RES/< BOUND       │
└─────────────────────────────┘
              │
              ▼
┌─────────────────────────────┐
│     GENERATE METRIC FOR       │──── 308
│  ESTIMATED HIGH RES. IMAGE    │
└─────────────────────────────┘
              │
              ▼
```

310 ─┐

METRIC < T  ──NO──►  ┌─────────────────────┐
                     │  USE NEW ESTIMATE    │
YES                  │ AS INITIAL ESTIMATE  │
                     │  IN NEXT ITERATION   │
                     └─────────────────────┘
                              └──── 312

DONE ──── 314

# FIGURE 3b

# FIGURE 3c

# FIGURE 4

$Y_1(m1,m2)$

$Y_2(m1,m2)$

$Y_1$

$Y_2$

$Y_C$

# FIGURE 5

$Y_C(n1,n2)$

FS

YC

**FIGURE 6**

EP 0 998 122 A2

A

34

D

18

# FIGURE 7

P0

36

36

P1

$\triangle$

Sensor Array

34

# FIGURE 8